# FASCICULE DE BREVET EUROPEEN

(11) **EP 1 571 294 B1**
(45) Date de publication et mention de la délivrance du brevet: **30.12.2009**
(21) Numéro de dépôt: 05290418.2
(22) Date de dépôt: 24.02.2005
(51) Int. Cl.: F01D 5/08, F01D 5/30, F01D 11/00

(54) **Flasque-crochet annulaire pour un disque de rotor**
Hakenförmige Seitenplatte für eine Rotorscheibe
Hook-shaped sideplate for a rotor disc

(30) Priorité: 03.03.2004 FR 0402172
(43) Date de publication de la demande: 07.09.2005
(73) Titulaire: SNECMA, 75015 Paris (FR)
(72) Inventeur: Marchi, Marc, 77350 Le Mee (FR)
(74) Mandataire: Barbin le Bourhis, Joël

(56) Documents cités:
- GB-A- 947 553
- US-A- 3 728 042
- US-A- 3 768 924
- US-A- 3 814 539
- US-A- 3 989 410
- US-A- 4 582 467

## Description

L'invention se rapporte à une turbomachine, comme par exemple un turboréacteur pour avion ; elle concerne plus particulièrement le refroidissement des aubes du rotor d'une turbine haute pression entraînée en rotation par l'énergie des gaz de combustion s'échappant d'une chambre de combustion annulaire.

Un turboréacteur classique comporte plusieurs turbines et notamment une turbine haute pression, dans laquelle, une roue à aubes est agencée en aval de la sortie annulaire d'une chambre de combustion où du carburant et de l'air sous pression sont injectés en continu pour entretenir la combustion. La roue à aubes permet d'entraîner en rotation le compresseur d'air qui alimente la chambre de combustion elle-même.

Les aubes de la roue doivent être refroidies. Pour ce faire, il est connu d'utiliser des aubes creuses. Chaque aube comporte une cavité à l'intérieur de laquelle on entretient une circulation forcée d'air de refroidissement. Une partie de l'air délivré par le compresseur, contourne la chambre de combustion pour être admis dans les aubes et être éjecté de celles-ci en aval de la roue à aubes, dans le flux des gaz de combustion.

La roue à aubes se compose d'un disque rotatif encore appelé disque de rotor lié à un arbre entraînant le compresseur. Les aubes sont engagées dans des alvéoles définies à la périphérie du disque rotatif. Classiquement, le profil d'une telle alvéole est dit "en sapin" et chaque aube comporte un élargissement dit "pied d'aube", de forme correspondant à celle de l'alvéole et engagé dans celle-ci. Un passage subsiste entre le fond de l'alvéole et le pied d'aube. La cavité définie dans l'aube communique avec ce passage.

Pour forcer l'air à s'engager dans ces passages, il est connu d'associer au disque rotatif, un disque dit "labyrinthe". Celui-ci est monté en regard d'une face du disque rotatif ; il est conformé pour guider une partie de l'air délivré par le compresseur vers les passages définis sous les pieds d'aube.

Il est connu de solidariser le disque-labyrinthe et le disque de rotor au voisinage des pieds d'aubes par des crabotages, ce qui complique la fabrication des deux disques. En effet, l'usinage de crabots et leur ébavurage est une opération longue et coûteuse. De plus, il est souhaitable, lorsque cela est possible, de supprimer toute forme géométrique à petits rayons ou discontinuités qui entraînent des concentrations de contraintes locales abaissant la durée de vie de la pièce. C'est particulièrement le cas des crabots.

US 3,768,924 décrit une fixation proche du crabotage où des crochets solidaires du disque de rotor et des crochets solidaires du disque labyrinthe alternent circonférentiellement et sont réunis par un anneau. Cette solution est aussi couteuse et compliquée que le crabotage.

Le brevet US 6 540 477 décrit un montage du disque-labyrinthe en appui périphérique contre le disque rotatif, mais cette solution, sans crabotage, ne peut empêcher la déformation du disque-labyrinthe sous les effets conjugués de la force centrifuge et de la chaleur, ce qui peut occasionner une fuite d'air et une perte d'efficacité du système de refroidissement.

US 3,989,410 décrit un agencement sur lequel le préambule de la revendication 1 est basé où le disque rotor et le disque labyrinthe sont assemblés par deux séries de boulons, ce qui présente aussi de graves inconvénients notamment en ce qui concerne la complexité de fabrication des disques et, surtout, les difficultés de montage.

L'invention apporte une solution à tous ces problèmes en proposant un montage sans crabotage par lequel la déformation du disque-labyrinthe est contenue.

Plus particulièrement, l'invention concerne une turbomachine comprenant une roue à aubes, lesdites aubes étant creuses et refroidies intérieurement par circulation forcée d'air de refroidissement, chaque aube étant montée à la périphérie d'un disque de rotor, du type dans lequel un disque-labyrinthe est associé audit disque de rotor pour définir un circuit d'alimentation d'air de refroidissement communiquant avec des cavités de circulation d'air définies dans lesdites aubes et ouvrant à la base de pieds d'aube raccordés audit disque rotatif, ledit disque-labyrinthe canalisant l'air vers ces pieds d'aube, caractérisé en ce qu'un flasque-crochet annulaire est intercalé entre le bord extérieur dudit disque-labyrinthe et ledit disque de rotor, en ce que ledit fiasque-crochet comporte un épaulement de retenue radiale externe formant crochet annulaire extérieur dans lequel s'encastre le bord extérieur dudit disque-labyrinthe et un épaulement d'appui radial interne formant crochet annulaire intérieur engagé dans un évidement circonférentiel axial dudit disque de rotor et en ce que ledit flasque-crochet comporte des passages pour l'écoulement de l'air vers les pieds d'aube. Le flasque-crochet comporte des trous disposés en regard des alvéoles définies à la périphérie du disque de rotor et dans lesquelles sont engagés les pieds d'aube.

Avantageusement, le disque-labyrinthe est monté avec précontrainte axiale en appui périphérique sur le flasque-crochet.

L'invention sera mieux comprise et d'autres avantages de celle-ci apparaîtront plus clairement à la lumière de la description qui va suivre d'une turbomachine conforme à son principe, donnée uniquement à titre d'exemple et faite en référence aux dessins annexés dans lesquels :
- la figure 1 est une vue schématique partielle d'un turboréacteur conforme à l'invention, montrant plus particulièrement la turbine haute pression et son système de refroidissement ;
- la figure 2 est une vue de détail à plus grande échelle d'une partie de la figure 1 ;
- la figure 3 est une vue partielle en perspective éclatée selon la flèche III de la figure 2 ; et
- la figure 4 est un schéma illustrant les interactions entre les parties assemblées conformément à l'invention ; et
- la figure 5 est une vue analogue à la figure 2 illustrant une variante.

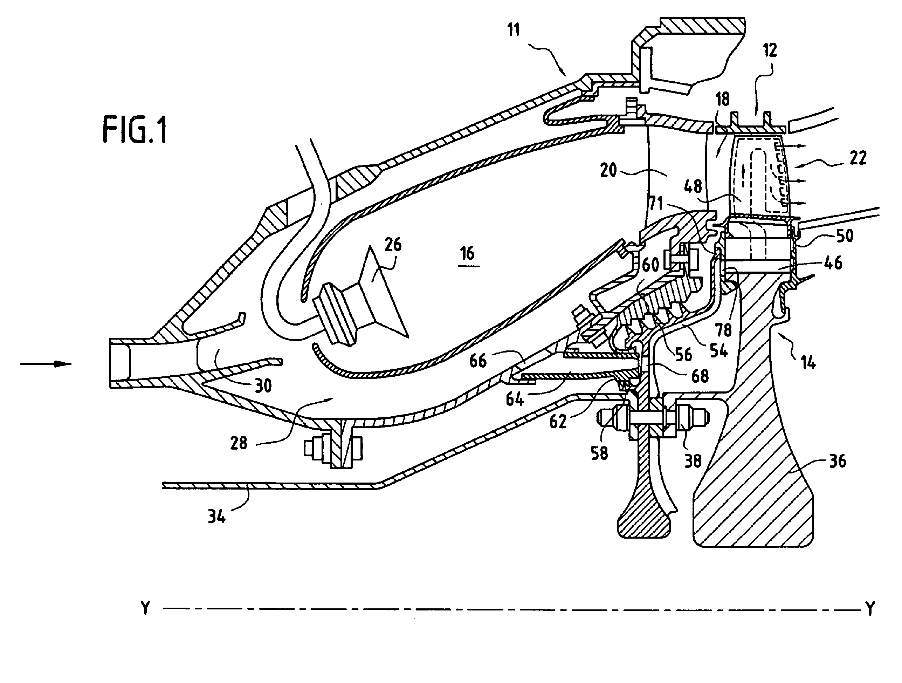

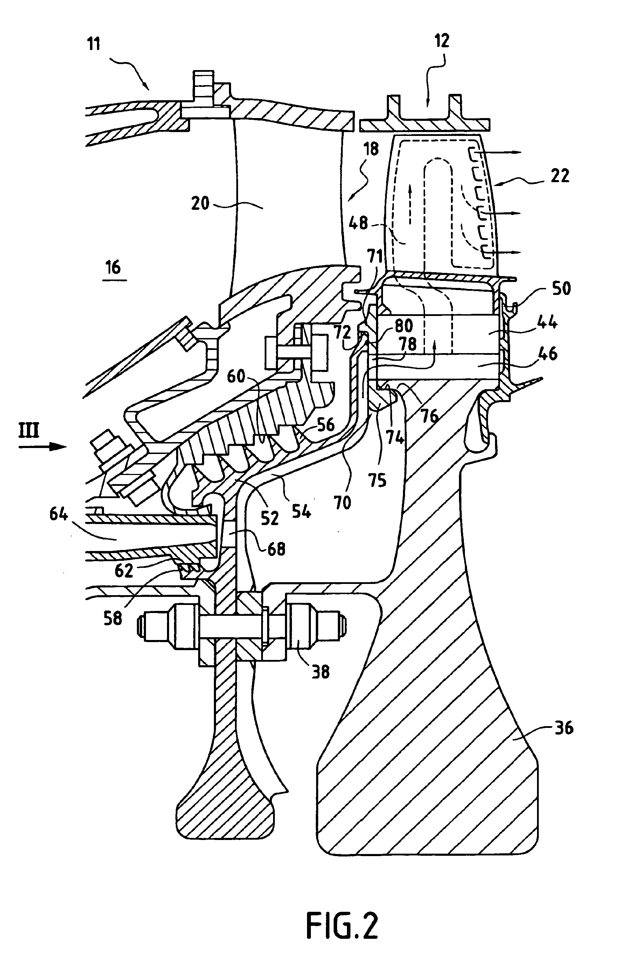

Sur les dessins, toutes les pièces représentées sont axi-symétriques, d'axe Y'-Y, les pièces mobiles admettant cet axe comme axe de rotation. En considérant plus particulièrement les figures 1 à 3, on a représenté une partie d'un turboréacteur 11 et notamment une turbine haute pression 12 associée à une chambre de combustion annulaire 16. La turbine comprend essentiellement une roue à aubes 14 entraînée en rotation par les gaz s'échappant de la chambre de combustion 16. La sortie annulaire 18 de cette dernière est munie de pales fixes 20 orientant les gaz vers les aubes 22 de ladite roue à aubes. Des injecteurs 26 sont agencés en couronne au fond de la chambre de combustion 16. Celle-ci est montée à l'intérieur d'un carter annulaire 28 qui comporte une couronne d'orifices d'entrée d'air 30 recevant de l'air sous pression délivré par un compresseur (non représenté), lui-même entraîné par un arbre creux 34, d'axe Y'-Y sur lequel est montée la roue à aubes 14. La plus grande partie de l'air sous pression introduit dans le carter 28 pénètre dans la chambre de combustion où il sert de comburant.

La roue à aubes 14 comporte un disque de rotor 36 fixé à l'arbre 34 par des boulons 38. Ce disque comporte, à sa périphérie extérieure, des alvéoles 40 allongées, à section droite constante et dont le profil connu est dit "en sapin". Ces alvéoles sont régulièrement réparties circonférentiellement à la périphérie du disque de rotor 36. Les aubes 22 sont encastrées dans ces alvéoles. A cet effet, chaque aube comporte un élargissement ou pied d'aube 44 dont le profil correspond à celui de la partie radialement la plus extérieure de l'alvéole dans laquelle il est engagé. Néanmoins, un passage 46 subsiste entre le fond de chaque alvéole et le pied d'aube 44 engagé dans celle-ci. Comme on le verra plus loin, les passages 46 sont mis à profit pour le passage de l'air de refroidissement des aubes placées en regard de la sortie annulaire 18 de la chambre de combustion 16.

Chaque aube comporte en effet, de façon connue, une cavité 48 à l'intérieur de laquelle une circulation forcée d'air de refroidissement est entretenue, cet air étant prélevé dans le carter 28. Ainsi, une partie de l'air délivré par le compresseur contourne la chambre de combustion 16 pour être admis à circuler à l'intérieur des aubes 22 avant d'être éjecté de celles-ci, principalement par des orifices s'étendant le long de leurs bords de fuite. L'air éjecté se mélange au flux des gaz de combustion ayant traversé la roue à aubes 14, ce flux étant canalisé vers une autre turbine non représentée. Chaque cavité 48 de circulation d'air débouche à la base du pied d'aube 44 dans le passage 46 défini ci-dessus. En aval de la roue à aubes, les extrémités des alvéoles (et par conséquent les passages 46) sont recouverts par un flasque annulaire 50. En amont, un disque-labyrinthe 52 est fixé au disque de rotor 36 pour définir avec lui un circuit d'alimentation d'air de refroidissement communiquant avec l'ensemble des passages 46 situés sous les pieds d'aube.

Le disque-labyrinthe 52 est rattaché au disque de rotor 36 et à l'arbre 34 par le même ensemble de boulons 38. Il comporte des nervures de rigidification 54 faisant face au disque de rotor. Des joints sont définis par des dents annulaires 56, 58 coopérant avec des surfaces annulaires 60, 62 correspondantes solidaires du carter 28. Pour permettre le prélèvement d'une partie de l'air injecté dans le carter 28, une buse 64 à structure annulaire s'étend entre une série d'orifices de sortie 66 pratiqués dans la paroi du carter et une série d'orifices d'entrée 68 pratiqués dans la paroi du disque-labyrinthe. Ainsi, de l'air sous pression est injecté en permanence dans un espace annulaire défini entre le disque-labyrinthe et le disque rotor. Cet espace annulaire communique avec les passages 46, comme on le verra plus loin.

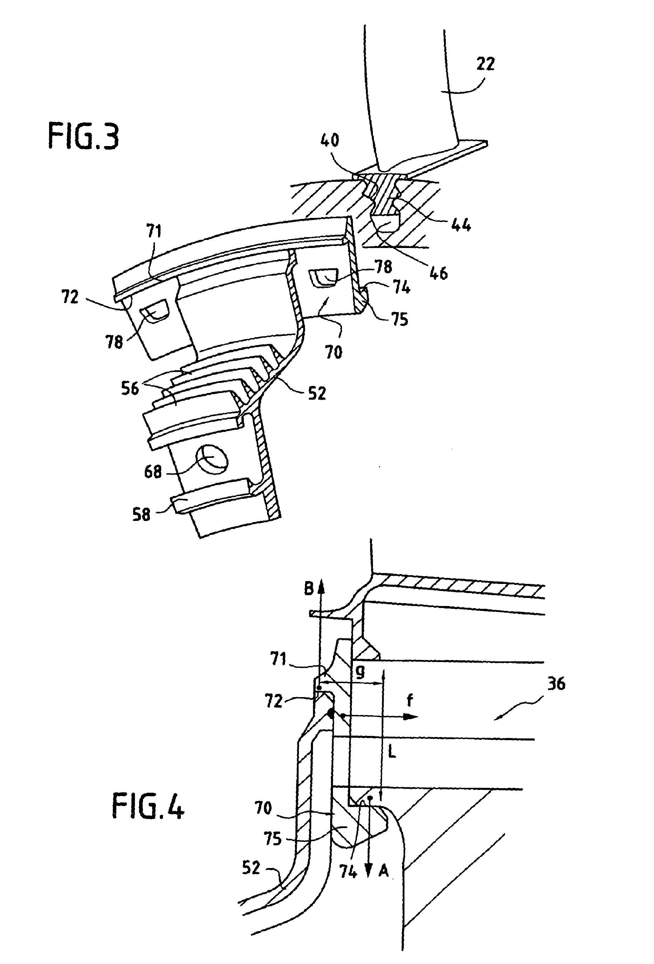

Selon une caractéristique remarquable de l'invention, un flasque-crochet annulaire 70 est intercalé entre le bord extérieur 71 du disque-labyrinthe 52 et ledit disque de rotor 14, pour stabiliser la position dudit bord extérieur 71 du disque-labyrinthe lorsque ce dernier a tendance à se déformer sous l'effet de la force centrifuge et de la chaleur. Pour ce faire, le flasque-crochet 70 comporte un épaulement de retenue 72 formant un crochet annulaire extérieur 71 dans lequel s'encastre le bord extérieur du disque-labyrinthe et un épaulement d'appui 74 formant crochet annulaire intérieur 75 engagé dans un évidement circonférientiel axial 76 du disque de rotor 36. En outre, le flasque-crochet comporte des passages pour l'écoulement de l'air vers les pieds d'aube. Plus précisément, le flasque-crochet comporte des trous 78 disposés en regard des extrémités des alvéoles 40 définies à la périphérie du disque de rotor et dans lesquelles sont engagés lesdits pieds d'aubes, respectivement. Un indexage du flasque-crochet 70 par rapport au disque de rotor 36 est prévu pour que les trous 78 soient bien disposés dans le prolongement des alvéoles. De plus, avantageusement, chaque trou 78 pratiqué dans le flasque-crochet 70 a un contour semblable à celui de la section transversale du passage 46 défini dans l'alvéole en regard, en dessous du pied d'aube correspondant. Cette particularité est plus particulièrement visible sur la figure 3. On limite ainsi les pertes de charge dans cette partie du circuit d'écoulement d'air.

Comme le montre le schéma de la figure 4, la force centrifuge B qui s'exerce par le disque labyrinthe sur le flasque crochet, au point d'appui matérialisé par l'épaulement 72, provoque une réaction A au point d'appui matérialisé par l'épaulement 74. Si g est le décalage axial entre A et B, un couple gA provoque une action f de la partie radialement la plus externe du flasque-crochet vers le disque de rotor 36, avec f = Ag/L , L étant la distance radiale entre l'épaulement 74 et le point d'appui de f. Cette action f a donc tendance à empêcher une fuite d'air entre le disque rotor et le flasque crochet en augmentant l'appui de ce dernier sur le disque rotor.

De plus, le disque-labyrinthe 52 est monté avec précontrainte axiale en appui périphérique sur le flasque-crochet 70. Eventuellement, un joint 80 peut être interposé entre le disque-labyrinthe et le flasque-crochet dans la zone de l'appui périphérique entre le bord du disque-labyrinthe et le flasque-crochet. Le disque-labyrinthe 58 comporte une surépaisseur périphérique favorisant son encastrement dans l'épaulement de retenue 72 du flasque-crochet.

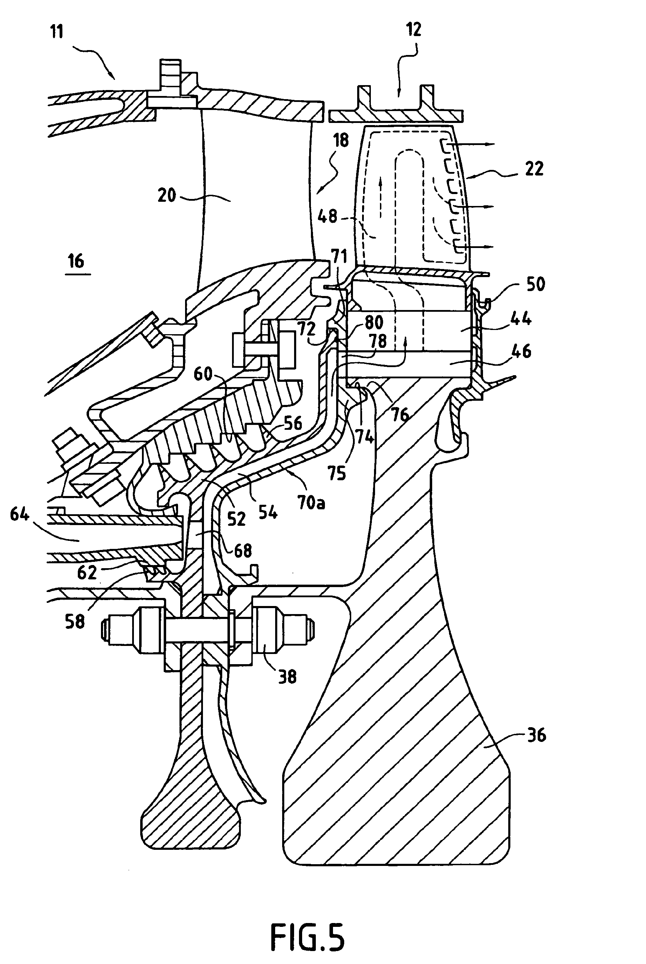

Dans la variante illustrée sur la figure 5, les éléments de structure analogues à ceux du mode de réalisation représenté sur les figures 1 à 3 portent les mêmes références numériques et ne seront pas décrits à nouveau. Cette variante se distingue par le fait que le flasque-crochet 70a se prolonge radialement vers l'intérieur au-delà de l'épaulement d'appui 74 en regard du disque-labyrinthe 52. Il est conformé de façon à rester sensiblement plaqué contre les nervures 54 de ce dernier. De cette façon, le circuit d'écoulement d'air de refroidissement est plus nettement défini le long du disque-labyrinthe 52, entre les nervures 54 de ce dernier.

En fonctionnement, une partie de l'air comprimé injecté dans le carter 28 s'échappe par les orifices 66 de celui-ci et est guidée vers les aubes creuses 22 de la roue à aubes, pour les refroidir, au lieu de servir de comburant dans la chambre de combustion 16. Le disque-crochet 70 ou 70a maintient le bord extérieur du disque-labyrinthe en position et évite toute fuite d'air à la périphérie du disque-labyrinthe.

## Revendications

1. Turbomachine comprenant une roue à aubes (14), lesdites aubes étant creuses et refroidies intérieurement par circulation forcée d'air de refroidissement, chaque aube (22) étant montée à la périphérie d'un disque de rotor, du type dans lequel un disque-labyrinthe (52) est associé audit disque de rotor pour définir un circuit d'alimentation d'air de refroidissement communiquant avec des cavités de circulation d'air (48) définies dans lesdites aubes et ouvrant à la base de pieds d'aube (44) raccordés audit disque rotatif, ledit disque-labyrinthe canalisant l'air vers ces pieds d'aube, **caractérisé en ce qu'**un flasque-crochet annulaire (70) est intercalé entre le bord extérieur dudit disque- labyrinthe et ledit disque de rotor, **en ce que** ledit flasque-crochet comporte un épaulement de retenue radiale externe (72) formant crochet annulaire extérieur dans lequel s'encastre le bord extérieur dudit disque-labyrinthe et un épaulement d'appui radial interne (74) formant crochet annulaire intérieur engagé dans un évidement circonférentiel axial dudit disque de rotor et **en ce que** ledit flasque-crochet comporte des passages (78) pour l'écoulement de l'air vers les pieds d'aube.

2. Turbomachine selon la revendication 1, **caractérisée en ce que** ledit flasque-crochet (70) comporte des trous (78) disposés en regard d'alvéoles (40) définies à la périphérie du disque de rotor et dans lesquelles sont engagés les pieds d'aube précités, respectivement.

3. Turbomachine selon la revendication 1 ou 2, **caractérisée en ce que** ledit flasque-crochet (70a) se prolonge au-delà dudit épaulement d'appui radlalement vers l'intérieur, en regard dudit disque-labyrinthe (52).

4. Turbomachine selon l'une des revendications précédentes, **caractérisée en ce que** ledit disque-labyrinthe (52) est monté avec précontrainte axiale en appui périphérique sur ledit flasque-crochet.

5. Turbomachine selon la revendication 4, **caractérisée en ce qu'**un joint (80) est interposé entre ledit disque-labyrinthe et ledit flasque-crochet dans la zone de l'appui périphérique précité.

6. Turbomachine selon l'une des revendications 2 à 5, **caractérisée en ce que** chaque trou (78) pratiqué dans ledit flasque-crochet a un contour semblable à celui de la section transversale d'un passage (46) défini dans l'alvéole en regard, en dessous du pied d'aube correspondant.

## Claims

1. A turbomachine including a blade wheel (14) having blades that are hollow and cooled internally by a forced flow of cooling air, each blade (22) being mounted in the periphery of a rotor disk, the wheel being of the type in which a labyrinth-disk (52) is associated with said rotor disk in order to define a cooling air supply circuit communicating with air-flow cavities (48) defined in said blades and opening out in the tips of blade roots (44) connected to said rotary disk, said labyrinth-disk channeling air towards said blade roots,
said turbomachine being **characterized in that** a hook-annulus (70) is interposed between the outer edge of said labyrinth-disk and said rotor disk, **in that** said hook-annulus includes a retaining shoulder (72) constituting an outer annular hook in which the outer edge of said labyrinth-disk is engaged, and a bearing shoulder (74) constituting an inner annular hook that is engaged in an axial groove around the circumference of said rotor disk, and **in that** said hook-annulus includes air flow passages (78) so that air can flow towards the blade roots.

2. A turbomachine according to claim 1, **characterized in that** the hook-annulus (70) has holes (78) disposed facing sockets (40) defined in the periphery of the rotor disk and receiving respective ones of the above-mentioned blades.

3. A turbomachine according to claim 1 or claim 2, **characterized in that** said hook-annulus (70a) extends radially inwards beyond said bearing shoulder, facing said labyrinth-disk (52).

4. A turbomachine according to any preceding claim, **characterized in that** said labyrinth-disk (52) is mounted bearing against the periphery of said hook-annulus, with axial pre-stress.

5. A turbomachine according to claim 4, **characterized in that** a gasket (80) is placed between said labyrinth-disk and said hook-annulus in the above-mentioned peripheral bearing zone.

6. A turbomachine according to any one of claims 2 to 5, **characterized in that** each hole (78) made in said hook-annulus has an outline similar to the outline of the cross-section of an air flow passage (46) defined in the facing socket, under the corresponding blade root.

## Patentansprüche

1. Turbomaschine mit einem Schaufelrad (14), wobei die Schaufeln hohl sind und durch Kühlluftzwangsumlauf innenseitig gekühlt werden, wobei jede Schaufel (22) am Umfang einer Rotorscheibe angebracht ist, des Typs, bei dem eine Labyrinthscheibe (52) der Rotorscheibe zugeordnet ist, um einen Kühlluftversorgungskreis zu definieren, der mit Luftzirkulationshohlräumen (48), die in den Schaufeln ausgebildet sind und sich an der Basis von mit der umlaufenden Scheibe verbundenen Schaufelfüßen (44) öffnen, in Verbindung steht, wobei die Labyrinthscheibe die Luft in Richtung dieser Schaufelfüße kanalisiert, **dadurch gekennzeichnet, daß** zwischen den Außenrand der Labyrinthscheibe und der Rotorscheibe ein ringförmiger Hakenflansch (70) eingesetzt ist, daß der Hakenflansch eine radiale äußere Halteschulter (72) aufweist, die einen ringförmigen Außenhaken bildet, in den sich der Außenrand der Labyrinthscheibe einfügt, sowie eine radiale innere Auflageschulter (74), die einen ringförmigen Innenhaken bildet, der in eine axiale Umfangsausnehmung der Rotorscheibe eingesteckt ist, und daß der Hakenflansch Durchgänge (78) für das Strömen der Luft in Richtung der Schaufelfüße aufweist.

2. Turbomaschine nach Anspruch 1, **dadurch gekennzeichnet, daß** der Hakenflansch (70) Löcher (78) aufweist, die Mulden (40) gegenüber angeordnet sind, die am Umfang der Rotorscheibe ausgebildet und in die jeweils die vorgenannten Schaufelfüße eingesteckt sind.

3. Turbomaschine nach Anspruch 1 oder 2, **dadurch gekennzeichnet, daß** der Hakenflansch (70a) sich gegenüber der Labyrinthscheibe (52) über die Auflageschulter hinaus radial nach innen fortsetzt.

4. Turbomaschine nach einem der vorhergehenden Ansprüche, **dadurch gekennzeichnet, daß** die Labyrinthscheibe (52) mit axialer Vorspannung in umfangsseitiger Anlage an dem Hakenflansch angebracht ist.

5. Turbomaschine nach Anspruch 4, **dadurch gekennzeichnet, daß** zwischen der Labyrinthscheibe und dem Hakenflansch, im Bereich der vorgenannten umfangsseitigen Anlage eine Dichtung (80) eingefügt ist.

6. Turbomaschine nach einem der Ansprüche 2 bis 5, **dadurch gekennzeichnet, daß** jedes in dem Hakenflansch ausgebildete Loch (78) eine ähnliche Kontur wie der Querschnitt eines in der gegenüberliegenden Mulde unterhalb des entsprechenden Schaufelfußes ausgebildeten Durchgangs (46) aufweist.
